# NEW EUROPEAN PATENT SPECIFICATION

(11) **EP 1 208 732 B2**
(45) Date of publication and mention of the opposition decision: **07.10.2009**
(45) Mention of the grant of the patent: 09.11.2005
(21) Application number: 01204280.0
(22) Date of filing: 09.11.2001
(51) Int. Cl.: A01B 71/08

(54) **Oil reclaim bottle**
Ölsammelflasche
Bouteille pour le rassemblement d'huile

(30) Priority: 16.11.2000 GB 0027943
(43) Date of publication of application: 29.05.2002
(73) Proprietor: CNH U.K. LIMITED, Basildon, Essex S14 3AD (GB)
(72) Inventor: Callan, Jim, Grays, Essex RM17 5SU (GB)
(74) Representative: Feldkamp, Rainer

(56) References cited:
- DE-A- 2 725 058
- US-A- 2 797 957
- PROSPEKT ATLES 935 RZ 01 October 2000,
- PHOTOSERIES ATLES 935 RZ
- 'extract of online component parts catalogue' CLAAS METADOC FÜR ATLES 935 RZ

## Description

The present invention relates to an oil reclaim bottle for use on an agricultural vehicle to prevent oil spillage from a hydraulic valve that is provided on the vehicle for connection to external accessories.

Agricultural vehicles such as tractors and combine harvesters, are often designed to drive accessories hydraulically and to this end they are provided with valves to which hydraulic hoses of the accessories can be connected. During connection and disconnection of hoses to the valves, there is a tendency for some oil to drip from the valves. And also during normal operation of the valves, in case the connection between the hoses and the valves is not completely fluid-tight due to a badly operating seal, there may be some bleeding of a minimal amount of fluid from the valves.

To prevent soiling of the vehicle and environmental pollution, it is known to provide collect drips from each valve, and to conduct the oil by means of flexible tubes to a remotely located reclaim bottle.

The above solution has the disadvantage that it requires several components leading to increased assembly time and moreover is prone to interference with moving parts, such as a three point hitch, especially when installed at the back of a tractor.

It is therefore an object of the present invention to provide a simplified oil reclaim bottle that easily can be fitted and requires few components.

According to the present invention, there is provided an oil reclaim bottle as claimed for use on an agricultural vehicle to prevent oil spillage from a hydraulic valve that is provided on the vehicle for connection to external accessories.

It is common for agricultural vehicles to have valves arranged in groups of four (or even more), each group consisting of two pairs of vertically spaced valves with the pairs spaced horizontally from one another. To suit such a valve configuration, the bottle may have two horizontally spaced openings each receiving oil drips from a respective one of the pairs of valves.

In such a configuration, the mounting means may simply comprise a clamping bolt projecting upwards from the bottle between the two pairs of valves into a transverse yoke located above and straddling the two pairs of valves.

The bottle may be constructed of sheet metal but it is preferred for it to be formed of a plastics material such as polyethylene or polypropylene.

The invention will now be described further, by way of example, with reference to the accompanying drawings, in which:
Figure 1 is a rear view of a tractor with two groups of hydraulic valves, one fitted with a conventional oil reclaim bottle and the other with an oil reclaim bottle in accordance with the invention;
Figure 2 shows to an enlarged scale the group of valves fitted with the oil reclaim bottle of the invention;
Figure 3 is a perspective view of the oil reclaim bottle prior being fitted to the valves; and
Figure 4 is a view similar to Figure 2 showing an alternative embodiment.

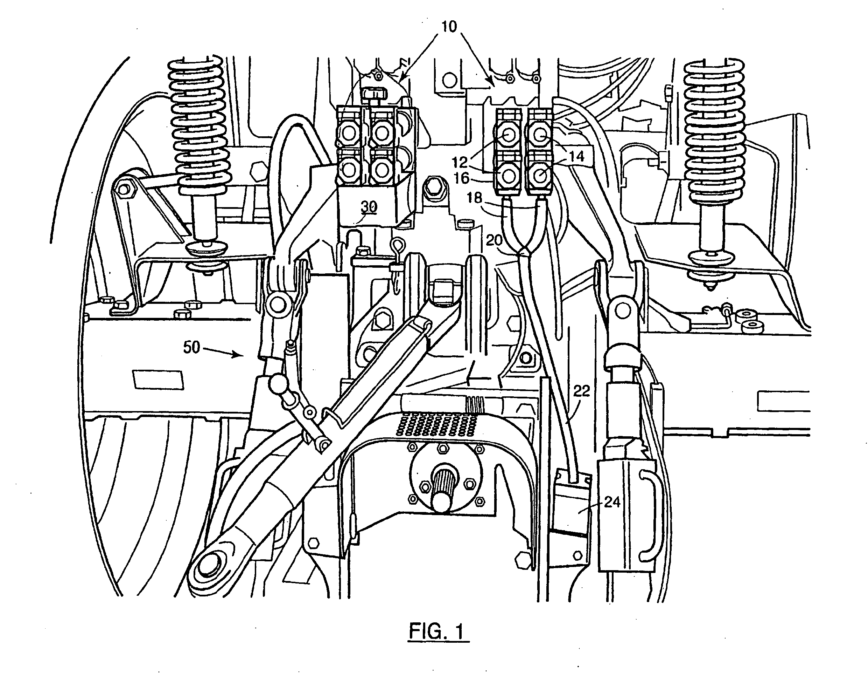

Figure 1 shows the rear end of a tractor having hydraulic valves for driving accessories (not shown) which are arranged in two groups 10 of four valves. Each group 10 comprises two pairs of valves 12, 14 for driving two accessories. The valves are in pairs because, at any one time, one valve will act as a supply valve to the driven accessory and the other as a return valve.

Driven accessories are connected to the valves by means of flexible hydraulic hoses (not shown). During connection and disconnection of the hoses from the valves 12 and 14, some escape of oil is inevitable and to avoid environmental pollution, oil drips need to be collected and stored in a reclaim bottle.

The two valves constituting each of the pair of valves 12 or 14 connected to the same accessory, are arranged one above the other and their connector housings 16 communicate with one another so that escaping oil from either valve in the pair drips out of the connector housing 16 of the lower valve.

The conventional arrangement of a reclaim bottle is shown in Figure 1 fitted to the right hand group of valves. Flexible tubes 18 which are connected to the lower valve connector housing 16 in each pair are joined by means of a Y-shaped coupling to a common tube 22 which leads to a bottle 24 located remotely from the valves. A special bracket has to be provided on the vehicle to act as a receptacle for the reclaim bottle 24.

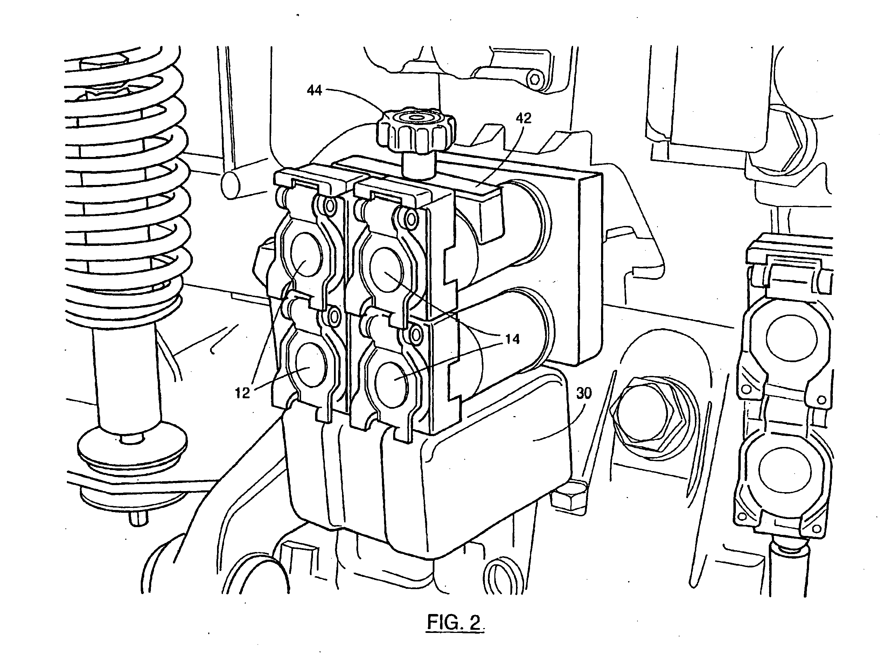

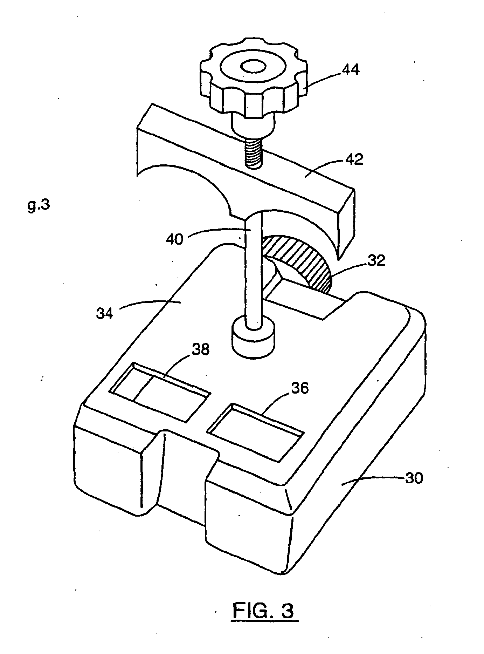

By contrast, the bottle 30 of the preferred embodiment of the invention, shown on the left hand side in Figure 1 and to an enlarged scale in Figure 2, comprises a plastics bottle 30 that is mounted immediately below the valves 12 and 14 to receive any drip directly. As shown in Figure 3, the bottle 30 is a plastics container with a removable cap 32. The cap is provided to allow the contents of the bottle to be emptied when the reclaimed oil reaches its full capacity. The top surface 34 of the bottle 30 is formed with two openings 36 and 38 that lie beneath the valve connector housings 16 to receive oil drips. In a preferred embodiment, the bottle 30 is held in place by means of a bolt 40 that passes between the two pairs of valves 12 and 14 and through a yoke 42 fitted over the two upper valves. Tightening of an internally threaded hand wheel 44 that engages the bolt 40 clamps the bottle 30 beneath the valves and maintains the openings 36 and 38 in sealing engagement with the lower valves of the group.

The described preferred embodiment of the invention offers the advantages of using fewer components, in that it dispenses with the flexible tubes 18 and 22, the Y-shaped coupling 20 and the bracket for receiving the bottle 24. The bottle is quicker to assemble as it can be offered up to the valves from beneath and then mounted in position by simply slipping the yoke 42 over the end of the bolt 40 and tightening the hand wheel 42, the entire operation requiring no tools. The risk of leakage is reduced because there are no tubes that can be damaged or that can come loose. Furthermore, as the bottle is mounted in a readily accessible space immediately beneath the valves, it does not reduce the clearance for any of the moving components of the vehicle, in particular the pick-up hitch linkage which is designated 50 in Figure 1.

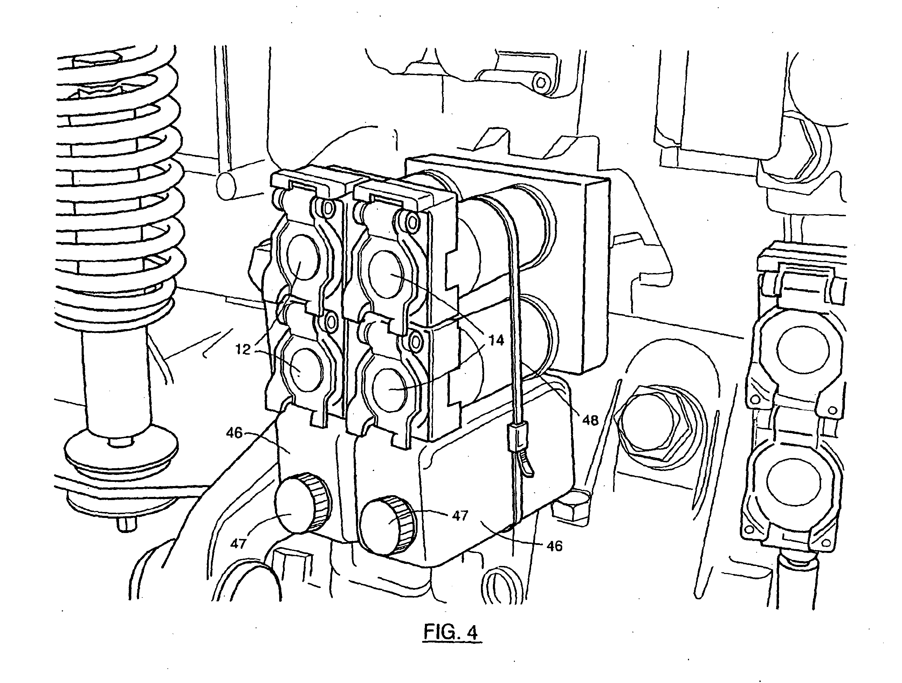

In a further simplified alternative embodiment shown in Figure 4, the single bottle 30 has been replaced by two separate bottles 46, each associated with a respective pair of vertically arranged valves. Each bottle 46 has a removable cap 47 provided at a lower part of the rearwardly facing side of the bottle enabling the bottle to be emptied on a timely basis without having to remove the bottle from the valve block. To improve emptying, the bottle 46 could be provided with a bottom wall sloping downwardly towards the cap 47. Each bottle 46 is attached to its respective pair of valves by means of a single-use plastic strap 48. In an alternative way of emptying the bottle, the strap 48 also could be cut and replaced by a new strap when refitting the bottle 46.

It will be appreciated that the present invention is not limited for use to the design of the valves as shown in the drawings. Instead of two valves provided one above the other, also four or even more valves could be provided in a vertically arranged stack. It furthermore is not required for the valves provided in one vertical plane to be horizontally co-planer with the valves in the adjacent other vertical plane. The valves of adjacent vertical planes indeed may be staggered resulting in the lower valves of the vertical stacks being provided at different horizontal levels. This design allows the valve stacks to be fitted closer to each other thereby reducing the overall transverse dimension. The solution with the separate bottles 46 easily could be applied to the latter design as the vertical positions of the bottles 46 are independent from one another. In case a single bottle, comparable to the Figure 3 embodiment, nevertheless would be preferred for the two adjacent, staggered valve stacks, then the bottle should be provided with a longitudinally provided step in its upper surface such that one of the openings 36, 38 is provided at a different horizontal level than the other opening, each opening again sealingly engaging its associated valve.

It furthermore will be appreciated that the present invention is also applicable to a single valve or a pair of valves, either arranged vertically above one another or horizontally next to each other.

## Claims

1. An oil reclaim bottle for use on an agricultural vehicle to prevent oil spillage from a hydraulic valve (12, 14) that is provided on the vehicle for connection to external accessories, and
**characterized in that** the bottle (30/46) is shaped to fit immediately below the hydraulic valve and has mounting means (40, 42, 44/48) enabling the bottle to be mounted on the vehicle immediately below the hydraulic valve (12, 14) and operative to secure the bottle (30/46) directly to the valve (12, 14), said bottle (30/46) having at least one opening (36, 38) in its top surface (34) through which drips of oil from the valve (12, 14) may enter directly into the bottle (30/46), and **in that**, when mounted on the vehicle, the at least one opening (36, 38) in the top surface (34) of the bottle (30/46) is closed and sealed by the valve (12, 14).

2. An oil reclaim bottle according to claim 1, **characterized in that** the bottle (30/46) is provided with a removable cap (32/47) for emptying the bottle.

3. An oil reclaim bottle according to any of the preceding claims, **characterized in that** the bottle (30) is provided for use in a vehicle having valves (12, 14) arranged in groups of at least four, each group consisting of two pairs of vertically spaced valves with the pairs spaced horizontally from one another, wherein the bottle has two horizontally spaced openings (36, 38) each receiving oil drips from a respective one of the pairs of valves.

4. An oil reclaim bottle according to claim 3, **characterized in that** the mounting means comprise a clamping bolt (40) projecting upwards from the bottle (30) between the two pairs of valves (12, 14) into a transverse yoke (42) located above and straddling the two pairs of valves.

5. An oil reclaim bottle according to claim 2, **characterized in that** the bottle (46) is provided for use in a vehicle having valves (12, 14) arranged in vertically arranged stacks, each stack having a separate bottle (46) attached to it.

6. An oil reclaim bottle according to claim 5, **characterized in that** each said bottle (46) is attached to its associated stack of valves by means of a removable strap (48).

7. An oil reclaim bottle according to claim 6, **characterized in that** the strap (48) is a single-use, plastic strap.

8. An oil reclaim bottle according to claim 2 and any claim dependent therefrom, **characterized in that** the bottom wall of the bottle (30(46) is sloping downwardly towards the removable cap (32/47).

9. An oil reclaim bottle according to any of the preceding claims, **characterized in that** the bottle (30/46) is formed of a moulded plastics material.

## Patentansprüche

1. Ölsammelflasche zur Verwendung auf einem landwirtschaftlichen Fahrzeug zum Verhindern eines Auslaufens von Öl von einem Hydraulik-Ventil (12, 14), das auf dem Fahrzeug zur Verbindung mit externen Zusatzgeräten vorgesehen ist, und
**dadurch gekennzeichnet, dass** die Flasche (30/46) so geformt ist, dass sie unmittelbar unter das Hydraulik-Ventil passt und Befestigungseinrichtungen (40, 42, 44/48) aufweist, die es ermöglichen, dass die Flasche auf dem Fahrzeug unmittelbar unterhalb des Hydraulik-Ventils (12, 14) befestigt werden kann und die betreibbar sind, um die Flasche (30/46) direkt an dem Ventil (12, 14) zu befestigen, wobei die Flasche (30/46) zumindest eine Öffnung (36, 38) in ihrer oberen Oberfläche (34) aufweist, durch die hindurch Öltropfen von dem Ventil (12, 14) direkt in die Flasche (30, 46) eintreten können, und dass bei der Befestigung auf dem Fahrzeug die zumindest eine Öffnung (36, 38) in der oberen Oberfläche (34) der Flasche (30/46) durch das Ventil (12, 14) verschlossen und abgedichtet ist.

2. Ölsammelflasche nach Anspruch 1, **dadurch gekennzeichnet, dass** die Flasche (30/46) mit einer abnehmbaren Kappe (32/47) zum Entleeren der Flasche versehen ist.

3. Ölsammelflasche nach einem der vorhergehenden Ansprüche, **dadurch gekennzeichnet, dass** die Flasche (30) zur Verwendung in einem Fahrzeug vorgesehen ist, das Ventile (12, 14) aufweist, die in Gruppen von zumindest vier Ventilen angeordnet sind, wobei jede Gruppe aus zwei Paaren von mit vertikalem Abstand angeordneten Ventilen besteht, wobei die Paare in Horizontalrichtung mit Abstand voneinander angeordnet sind, wobei die Flasche zwei mit horizontalem Abstand angeordnete Öffnungen (36, 38) aufweist, die jeweils Öltropfen von einem jeweiligen einen Ventil der Paare von Ventilen empfangen.

4. Ölsammelflasche nach Anspruch 3, **dadurch gekennzeichnet, dass** die Befestigungseinrichtungen eine Klemmschraube (40) umfassen, die von der Flasche (30) zwischen den zwei Paaren von Ventilen (12, 14) nach oben in ein Querjoch (42) vorspringt, das sich oberhalb der zwei Paare von Ventilen befindet und diese überquert.

5. Ölsammelflasche nach Anspruch 2, **dadurch gekennzeichnet, dass** die Flasche (46) zur Verwendung in einem Fahrzeug vorgesehen ist, das in vertikal angeordneten Stapeln angeordnete Ventile (12, 14) aufweist, wobei jeder Stapel eine daran befestigte getrennte Flasche (46) aufweist.

6. Ölsammelflasche nach Anspruch 5, **dadurch gekennzeichnet, dass** jede Flasche (46) an ihrem zugehörigen Stapel von Ventilen mit Hilfe eines entfernbaren Binders (48) befestigt ist.

7. Ölsammelflasche nach Anspruch 6, **dadurch gekennzeichnet, dass** der Binder (48) ein für eine einmalige Verwendung bestimmter Kunststoffbinder ist.

8. Ölsammelflasche nach Anspruch 2 und einem der darauf zurückbezogenen Ansprüche, **dadurch gekennzeichnet, dass** die Bodenwand der Flasche (30/46) nach unten hin in Richtung auf die abnehmbare Kappe (32/47) geneigt ist.

9. Ölsammelflasche nach einem der vorhergehenden Ansprüche, **dadurch gekennzeichnet, dass** die Flasche (30/46) aus einem geformten Kunststoffmaterial gebildet ist.

## Revendications

1. Bouteille de récupération d'huile destinée à être utilisée sur un véhicule agricole (12, 14) de manière à empêcher les fuites d'huile d'une vanne hydraulique qui est montée sur le véhicule pour être raccordée à des accessoires extérieurs, et
**caractérisée en ce qu'**elle possède des moyens de montage (40, 42, 44/48) qui permettent le montage de la bouteille (30/46) sur le véhicule immédiatement au-dessous de la vanne hydraulique (12, 14) et qui sont opérationnels pour fixer la bouteille (30/46) directement sur la vanne (12, 14), ladite bouteille (30/46) possédant au moins une ouverture (36, 38) dans sa surface supérieure (34) par laquelle les gouttes d'huile provenant de la vanne (12, 14) peuvent pénétrer directement dans la bouteille (30/46), et **en ce que**, lorsqu'elle est montée sur le véhicule, la au moins une ouverture (36, 38) dans la surface supérieure (34) de la bouteille (30/46) est obturée et rendue étanche par la vanne (12, 14).

2. Bouteille de récupération d'huile selon la revendication 1, **caractérisée en ce que** la bouteille (30/46) est dotée d'un capuchon amovible (32/47) pour la vidange de la bouteille.

3. Bouteille de récupération d'huile selon l'une quelconque des revendications qui précèdent, **caractérisée en ce que** la bouteille (30) est prévue pour être utilisée sur un véhicule doté de vannes (12, 14) disposées par groupes d'au moins quatre, chaque groupe comprenant deux paires de vannes espacées verticalement, les paires étant espacées horizontalement les unes par rapport aux autres, dans laquelle la bouteille possède deux ouvertures espacées horizontalement (36, 38), chacune d'elle recevant l'huile d'une des paires de vannes, respectivement.

4. Bouteille de récupération d'huile selon la revendication 3, **caractérisée en ce que** les moyens de montage comprennent un boulon de serrage (40) sortant du haut de la bouteille (30) entre les deux paires de vannes (12, 14) pour traverser une fourche transversale (42) située au-dessus des deux paires de vannes et chevauchant celles-ci.

5. Bouteille de récupération d'huile selon la revendication 2 **caractérisée en ce que** la bouteille (46) est prévue pour être utilisée sur un véhicule doté de vannes (12, 14) disposées dans des empilages verticaux, chaque empilage possédant une bouteille séparée (46) fixée audit empilage..

6. Bouteille de récupération d'huile selon la revendication 5, **caractérisée en ce que** chaque dite bouteille (46) est fixée à son empilage associé de vannes au moyen d'un étrier amovible (48).

7. Bouteille de récupération d'huile selon la revendication 6, **caractérisée en ce que** l'étrier (48) est un étrier en plastique à usage unique.

8. Bouteille de récupération d'huile selon la revendication 2 et toute revendication en dépendant, **caractérisée en ce que** la paroi de fond de la bouteille (30/46) est inclinée vers la bas en direction du capuchon amovible (32/47).

9. Bouteille de récupération d'huile selon l'une quelconque des revendications qui précèdent, **caractérisée en ce que** la bouteille (30/46) est formée d'une matière plastique moulée.
